# EUROPEAN PATENT APPLICATION

(11) **EP 4 648 480 A1**
(43) Date of publication of application: **12.11.2025**
(21) Application number: 24822573.2
(22) Date of filing: 31.05.2024
(51) Int. Cl.: H04W 36/16

(54) **INFORMATION TRANSMISSION METHOD AND RELATED APPARATUS**

(30) Priority: 13.06.2023 CN 202310701382
(71) Applicant: Huawei Technologies Co., Ltd., Shenzhen, Guangdong 518129 (CN)
(72) Inventor: HU, Weiwei, Shenzhen, Guangdong 518129 (CN); LIAO, Wen, Shenzhen, Guangdong 518129 (CN); XIE, Yingying, Shenzhen, Guangdong 518129 (CN)
(74) Representative: Goddar, Heinz J.
(86) International application number: PCT/CN2024/096845
(87) International publication number: WO 2024/255621

(57) **Abstract**

An information transmission method and a related apparatus are provided. In the method, a first AP determines k second APs from m APs, where the m APs include the first AP, an RSSI corresponding to each of the k second APs is greater than an RSSI corresponding to a third AP, the third AP is an AP currently connected to a STA, the RSSI corresponding to the second AP is an RSSI for the second AP to receive a signal from the STA, and the RSSI corresponding to the third AP is an RSSI for the third AP to receive a signal from the STA. The first AP sends first information to n fourth APs, where the n fourth APs are all APs other than the first AP and the k second APs in the m APs, and the first information indicates the fourth APs to hide an SSID in a broadcast beacon frame. This manner helps increase a success rate of switching the STA from the third AP to the second AP with a stronger network signal, and improve user experience.

## Description

This application claims priority to Chinese Patent Application No. 202310701382.X, filed with the China National Intellectual Property Administration on June 13, 2023 and entitled "INFORMATION TRANSMISSION METHOD AND RELATED APPARATUS", which is incorporated herein by reference in its entirety.

### TECHNICAL FIELD

This application relates to the field of communication technologies, and in particular, to an information transmission method and a related apparatus.

### BACKGROUND

In a network environment of a wireless local area network (wireless fidelity, Wi-Fi), a station (station, STA) may be connected to an access point (access point, AP) to implement network access. In a whole-house intelligence scenario, a STA serving as a smart home device may autonomously select an AP based on a connection algorithm of the STA, and initiate a Wi-Fi network connection to the selected AP to access the AP. However, to reduce costs, a Wi-Fi chip (module) used in the smart home device is usually simple. As a result, the STA has a limited active network selection capability, and may access an AP with a weak Wi-Fi network signal, affecting user experience.

### SUMMARY

Embodiments of this application provide an information transmission method and a related apparatus, to increase a success rate of switching a STA to an AP with a stronger Wi-Fi network signal, and improve user experience.

A first aspect provides an information transmission method. The method may be applied to a first AP, may be applied to a chip in the first AP, or may be applied to a logical module or software that can implement all or a part of functions of the first AP. The following uses the first AP as an example for description. The method includes: The first AP determines k second APs from m APs, where m is an integer not less than 2, the m APs include the first AP, k is a positive integer less than m, a received signal strength indicator (received signal strength indicator, RSSI) corresponding to each of the k second APs is greater than an RSSI corresponding to a third AP, the third AP is an AP currently connected to a STA, the RSSI corresponding to the second AP is an RSSI for the second AP to receive a signal from the STA, and the RSSI corresponding to the third AP is an RSSI for the third AP to receive a signal from the STA. The first AP sends first information to n fourth APs, where the n fourth APs are all APs other than the first AP and the k second APs in the m APs, n is a positive integer less than m, and the first information indicates the n fourth APs to hide network service set identifiers (network service set identifier, SSID) in broadcast beacon frames.

It can be learned that, for the STA, a Wi-Fi network signal of the second AP is stronger than a Wi-Fi network signal of the third AP currently connected to the STA. The first AP indicates all the APs other than the first AP and the k second APs in the m APs to hide SSIDs in broadcast beacon frames, so that all the APs other than the first AP and the k second APs in the m APs hide the SSIDs in the broadcast beacon frames, and the k second APs do not hide SSIDs in broadcast beacon frames. In this way, in a process in which the STA performs SSID scanning after being disconnected from the third AP, the STA can find, through scanning, the SSID corresponding to the second AP to discover the second AP, and all the APs other than the first AP and the k second APs in the m APs are invisible to the STA. This helps increase a success rate of connecting the STA to the second AP, that is, increase a success rate of switching the STA from the third AP to the second AP with the stronger Wi-Fi network signal, and improve user experience.

**In** an optional implementation, the method further includes: the first AP detects that the STA is successfully connected to one of the k second APs after the STA is disconnected from the third AP, the first AP sends second information to the n fourth APs, where the second information indicates the n fourth APs to cancel hiding the SSIDs in the beacon frames. In this manner, after the STA is successfully connected to the second AP, the first AP indicates, in time, the fourth AP to cancel hiding the SSID in the beacon frame, so that after the STA is successfully connected to the second AP, a remaining STA can find, through scanning in time, an SSID corresponding to the fourth AP. This reduces impact on the remaining STA caused when the remaining STA always cannot find, through scanning, the SSID corresponding to the fourth AP because the fourth AP always hides the SSID in the broadcast beacon frame.

In an optional implementation, the method further includes: The first AP sends third information to the n fourth APs, where the third information indicates the n fourth APs to start a first timer, and the first timer is used to perform timing for hiding the SSIDs **in** the beacon frames. In this manner, when the first timer expires, regardless of whether the STA is successfully switched to the second AP, the fourth AP cancels hiding the SSID in the beacon frame, so that the remaining STA can find, through scanning, the SSID corresponding to the fourth AP. This reduces the impact on the remaining STA caused when the remaining STA always cannot find, through scanning, the SSID corresponding to the fourth AP because the fourth AP always hides the SSID in the broadcast beacon frame.

In an optional implementation, the method further includes: The first AP sends fourth information to the n fourth APs, where the fourth information indicates the n fourth APs not to respond to a management frame from the STA. In this manner, the fourth AP does not respond to the management frame from the STA **in** addition to hiding the SSID in the broadcast beacon frame. In this way, even if the STA learns of the SSID corresponding to the fourth AP and sends the management frame to the fourth AP, the fourth AP does not reply to the management frame from the STA. Therefore, the STA cannot complete a connection negotiation process with the fourth AP, and the STA cannot access the fourth AP. This helps further increase the success rate of connecting the STA to the second AP after the STA is disconnected from the third AP, that is, further increase the success rate of switching the STA from the third AP to the second AP.

Optionally, the method further includes: the first AP detects that the STA is successfully connected to one of the k second APs after the STA is disconnected from the third AP, the first AP sends fifth information to the n fourth APs, where the fifth information indicates the n fourth APs to cancel not responding to the management frame from the STA. In this manner, after the STA is successfully connected to the second AP, the first AP notifies, in time, the fourth AP to cancel not responding to the management frame from the STA, so that the fourth AP can respond to the management frame from the STA when the STA subsequently wants to access the fourth AP. This reduces impact on the STA caused when the STA always cannot access the fourth AP because the fourth AP always does not respond to the management frame from the STA.

Optionally, the method further includes: The first AP sends sixth information to the n fourth APs, where the sixth information indicates the n fourth APs to start a second timer, and the second timer is used to perform timing for not responding to the management frame from the STA. In this manner, when the second timer expires, regardless of whether the STA is successfully switched to the second AP, the fourth AP cancels not responding to the management frame from the STA, so that the fourth AP can respond to the management frame from the STA when the STA subsequently wants to access the fourth AP. This reduces the impact on the STA caused when the STA always cannot access the fourth AP because the fourth AP always does not respond to the management frame from the STA.

In an optional implementation, the first AP is not one of the k second APs. The method further includes: The first AP hides an SSID in a broadcast beacon frame. In this manner, in a scenario in which the k second APs do not include the first AP, all APs other than the k second APs in the m APs hide SSIDs in broadcast beacon frames, to increase the success rate of connecting the STA to the second AP after the STA is disconnected from the third AP.

Optionally, the method further includes: When the first AP detects that the STA is successfully connected to one of the k second APs after the STA is disconnected from the third AP, the first AP cancels hiding the SSID in the beacon frame. It can be learned that, when the STA is successfully connected to the second AP, the first AP cancels, in time, hiding the SSID in the beacon frame, so that the remaining STA can find, through scanning in time, an SSID corresponding to the first AP. This reduces impact on the remaining STA caused when the remaining STA always cannot find, through scanning, the SSID corresponding to the first AP because the first AP always hides the SSID in the broadcast beacon frame.

Optionally, the method further includes: The first AP starts the first timer; and the first AP cancels, when the first timer expires, hiding the SSID in the beacon frame. It can be learned that the first AP cancels, in time based on the first timer, hiding the SSID in the beacon frame, so that the remaining STA can find, through scanning in time, an SSID corresponding to the first AP. This reduces impact on the remaining STA caused when the remaining STA always cannot find, through scanning, the SSID corresponding to the first AP because the first AP always hides the SSID in the broadcast beacon frame.

Optionally, the method further includes: The first AP starts the first timer. When the first AP detects, before the first timer expires, that the STA is successfully connected to one of the k second APs after the STA is disconnected from the third AP, the first AP cancels hiding the SSID in the beacon frame; or when the first AP fails to detect, before the first timer expires, that the STA is successfully connected to one of the k second APs after the STA is disconnected from the third AP, and the first timer expires, the first AP cancels hiding the SSID in the beacon frame. In this manner, the first AP can cancel, in time, hiding the SSID in the beacon frame, so that the remaining STA can find, through scanning in time, an SSID corresponding to the first AP. This reduces impact on the remaining STA caused when the remaining STA always cannot find, through scanning, the SSID corresponding to the first AP because the first AP always hides the SSID in the broadcast beacon frame.

In an optional implementation, the first AP is not one of the k second APs. The method further includes: The first AP does not respond to a management frame from the STA. It can be learned that, in this manner, in a scenario in which the k second APs do not include the first AP, all APs other than the k second APs in the m APs hide the SSIDs in the broadcast beacon frames and do not respond to the management frame from the STA, to further increase the success rate of connecting the STA to the second AP after the STA is disconnected from the third AP.

Optionally, the method further includes: When the first AP detects that the STA is successfully connected to one of the k second APs after the STA is disconnected from the third AP, the first AP cancels not responding to the management frame from the STA. It can be learned that, when the STA is successfully connected to the second AP, the first AP cancels, in time, not responding to the management frame from the STA, so that the first AP can respond to the management frame from the STA when the STA subsequently wants to access the first AP. This reduces impact on the STA caused when the STA always cannot access the first AP because the first AP always does not respond to the management frame from the STA.

Optionally, the method further includes: The first AP starts the second timer; and the first AP cancels, when the second timer expires, not responding to the management frame from the STA. It can be learned that the first AP can cancel, in time based on the second timer, not responding to the management frame from the STA, so that the first AP can respond to the management frame from the STA when the STA subsequently wants to access the first AP. This reduces impact on the STA caused when the STA always cannot access the first AP because the first AP always does not respond to the management frame from the STA.

Optionally, the method further includes: The first AP starts the second timer. When the first AP detects, before the second timer expires, that the STA is successfully connected to one of the k second APs after the STA is disconnected from the third AP, the first AP cancels not responding to the management frame from the STA; or when the first AP fails to detect, before the second timer expires, that the STA is successfully connected to one of the k second APs after the STA is disconnected from the third AP, and the second timer expires, the first AP cancels not responding to the management frame from the STA. It can be learned that the first AP cancels, in time, not responding to the management frame from the STA, so that the first AP can respond to the management frame from the STA when the STA subsequently wants to access the first AP. This reduces impact on the STA caused when the STA always cannot access the first AP because the first AP always does not respond to the management frame from the STA.

In an optional implementation, the RSSI corresponding to the third AP is less than a first value.

In an optional implementation, that the first AP determines the k second APs from the m APs includes: The first AP sends seventh information to an AP other than the first AP in the m APs, where the seventh information indicates the AP other than the first AP in the m APs to listen to a signal from the STA; the first AP receives an RSSI separately corresponding to at least one AP other than the first AP in the m APs, where the RSSI separately corresponding to the at least one AP is an RSSI for the at least one AP to separately receive a signal from the STA; and the first AP determines the k second APs based on the RSSI separately corresponding to the at least one AP. It can be learned that the first AP may indicate other APs than the third AP to listen to the signal from the STA, to determine, for the STA, the second AP with the stronger Wi-Fi network signal.

Optionally, the first AP is not the third AP, and the method further includes: The first AP listens to a signal from the STA, to obtain an RSSI corresponding to the first AP. That the first AP determines the k second APs based on the RSSI separately corresponding to the at least one AP includes: The first AP determines the k second APs based on the RSSI corresponding to the first AP and the RSSI separately corresponding to the at least one AP.

A second aspect provides an information transmission method. The method may be applied to a fourth AP, may be applied to a chip in the fourth AP, or may be applied to a logical module or software that can implement all or a part of functions of the fourth AP. The following uses the fourth AP as an example for description. The method includes: The fourth AP receives first information from a first AP, where the first information indicates the fourth AP to hide an SSID in a broadcast beacon frame; and the fourth AP hides the SSID in the broadcast beacon frame based on the first information.

It can be learned that the fourth AP hides the SSID in the broadcast beacon frame, so that a STA does not find, through scanning, the SSID corresponding to the fourth AP in a process of performing SSID scanning after being disconnected from a third AP, that is, the fourth AP is invisible to the STA. This helps increase a success rate of connecting the STA to a second AP (an AP that is determined by the first AP from m APs and that has a stronger Wi-Fi network signal), and improve user experience.

In an optional implementation, the method further includes: The fourth AP receives second information from the first AP, where the second information indicates the fourth AP to cancel hiding the SSID in the beacon frame; and the fourth AP cancels, based on the second information, hiding the SSID in the beacon frame. In this manner, impact on the STA caused when a remaining STA always cannot find, through scanning, the SSID corresponding to the fourth AP because the fourth AP always hides the SSID in the broadcast beacon frame can be reduced.

In an optional implementation, the method further includes: The fourth AP starts a first timer; and the fourth AP cancels, when the first timer expires, hiding the SSID in the beacon frame. The fourth AP cancels, in time based on the first timer, hiding the SSID in the beacon frame, so that the STA can find, through scanning, the SSID corresponding to the fourth AP. This reduces impact on the STA caused when the STA always cannot find, through scanning, the SSID corresponding to the fourth AP because the fourth AP always hides the SSID in the broadcast beacon frame.

In an optional implementation, the method further includes: The fourth AP starts a first timer. When the fourth AP receives second information from the first AP before the first timer expires, the fourth AP cancels hiding the SSID in the beacon frame; or when the fourth AP fails to receive second information from the first AP before the first timer expires, and the first timer expires, the fourth AP cancels hiding the SSID in the beacon frame. The second information indicates the fourth AP to cancel hiding the SSID in the beacon frame. In this manner, the fourth AP can cancel, in time, hiding the SSID in the beacon frame, so that the STA can find, through scanning, the SSID corresponding to the fourth AP. This reduces impact on the STA caused when the STA always cannot find, through scanning, the SSID corresponding to the fourth AP because the fourth AP always hides the SSID in the broadcast beacon frame.

In an optional implementation, the method further includes: The fourth AP receives third information from the first AP, where the third information indicates the fourth AP to start the first timer, and the first timer is used to perform timing for hiding the SSID in the beacon frame.

In an optional implementation, the method further includes: The fourth AP receives fourth information from the first AP, where the fourth information indicates the fourth AP not to respond to a management frame from the STA; and the fourth AP does not respond to the management frame from the STA based on the fourth information.

It can be learned that the fourth AP does not respond to the management frame from the STA in addition to hiding the SSID in the broadcast beacon frame. In this way, even if the STA learns of the SSID corresponding to the fourth AP and sends the management frame to the fourth AP, the fourth AP does not reply to the management frame from the STA. Therefore, the STA cannot complete a connection negotiation process with the fourth AP, and the STA cannot access the fourth AP. This helps further increase the success rate of connecting the STA to the second AP after the STA is disconnected from the third AP, that is, further increase a success rate of switching the STA from the third AP to the second AP.

Optionally, the method further includes: The fourth AP receives fifth information from the first AP, where the fifth information indicates the fourth AP to cancel not responding to the management frame from the STA; and the fourth AP cancels, based on the fifth information, not responding to the management frame from the STA. In this manner, the fourth AP can respond to the management frame from the STA when the STA subsequently wants to access the fourth AP. This reduces impact on the STA caused when the STA always cannot be connected to the fourth AP because the fourth AP always does not respond to the management frame from the STA.

Optionally, the method further includes: The fourth AP starts a second timer; and the fourth AP cancels, when the second timer expires, not responding to the management frame from the STA. In this manner, the fourth AP cancels, in time based on the second timer, not responding to the management frame from the STA, so that the fourth AP can respond to the management frame from the STA when the STA subsequently wants to access the fourth AP. This reduces impact on the STA caused when the STA always cannot be connected to the fourth AP because the fourth AP always does not respond to the management frame from the STA.

Optionally, the method further includes: The fourth AP starts a second timer. When the fourth AP receives fifth information from the first AP before the second timer expires, the fourth AP cancels not responding to the management frame from the STA; or when the fourth AP fails to receive fifth information from the first AP before the second timer expires, and the second timer expires, the fourth AP cancels not responding to the management frame from the STA. The fifth information indicates the fourth AP to cancel not responding to the management frame from the STA. In this manner, the fourth AP cancels, in time, not responding to the management frame from the STA, so that the fourth AP can respond to the management frame from the STA when the STA subsequently wants to access the fourth AP. This reduces impact on the STA caused when the STA always cannot be connected to the fourth AP because the fourth AP always does not respond to the management frame from the STA.

Optionally, the method further includes: The fourth AP receives sixth information from the first AP, where the sixth information indicates the fourth AP to start the second timer, and the second timer is used to perform timing for not responding to the management frame from the STA.

A third aspect provides a communication apparatus. The communication apparatus includes one or more processors and a memory. The memory is coupled to the one or more processors, and the memory is configured to store instructions or a program.

In an optional manner, the one or more processors invoke the instructions or the program stored in the memory, so that the communication apparatus performs the following operations:
determining k second APs from m APs, where m is an integer not less than 2, the m APs include the communication apparatus, k is a positive integer less than m, a received signal strength indicator RSSI corresponding to each of the k second APs is greater than an RSSI corresponding to a third AP, the third AP is an AP currently connected to a STA, the RSSI corresponding to the second AP is an RSSI for the second AP to receive a signal from the STA, and the RSSI corresponding to the third AP is an RSSI for the third AP to receive a signal from the STA; and
sending first information to n fourth APs, where the n fourth APs are all APs other than the communication apparatus and the k second APs in the m APs, n is a positive integer less than m, and the first information indicates the n fourth APs to hide SSIDs in broadcast beacon frames.

In addition, for another optional implementation of the communication apparatus in this aspect, refer to the related content of the first aspect. Details are not described herein again.

In another optional manner, the one or more processors invoke the instructions or the program stored in the memory, so that the communication apparatus performs the following operations:
receiving first information from a first AP, where the first information indicates the communication apparatus to hide an SSID in a broadcast beacon frame; and hiding the SSID in the broadcast beacon frame based on the first information.

In addition, for another optional implementation of the communication apparatus in this aspect, refer to the related content of the second aspect. Details are not described herein again.

It should be understood that the communication apparatus may be a device (for example, a router), or the communication apparatus may be a communication module in the device, or the communication apparatus may be a chip in the communication module.

A fourth aspect provides a chip system. The chip system includes a processor and an interface. The interface is configured to obtain a program or instructions. The processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include a chip and another discrete component.

A fifth aspect provides a program product. When the program product runs on a communication apparatus, the communication apparatus is enabled to perform the method described in any one of the possible implementations of the first aspect or the second aspect.

A sixth aspect provides a readable storage medium, including instructions. When the instructions are run on a communication apparatus, the communication apparatus is enabled to perform the method described in any one of the possible implementations of the first aspect or the second aspect.

It may be understood that the communication apparatus provided in the third aspect, the chip system provided in the fourth aspect, the program product provided in the fifth aspect, and the storage medium provided in the sixth aspect are all configured to perform the method provided in embodiments of this application. Therefore, for beneficial effects that can be achieved by the communication apparatus, the chip system, the program product, and the storage medium, refer to beneficial effects in the corresponding method. Details are not described herein again.

### BRIEF DESCRIPTION OF DRAWINGS

FIG. 1a is a diagram of a whole-house intelligence scenario according to an embodiment of this application;
FIG. 1b is a diagram of a whole-house intelligence floor plan according to an embodiment of this application;
FIG. 2 is a diagram of a structure of a communication system according to an embodiment of this application;
FIG. 3 is a diagram of a connection between APs and a STA according to an embodiment of this application;
FIG. 4 is a schematic flowchart of an information transmission method according to an embodiment of this application;
FIG. 5 is a diagram in which a first AP determines k second APs according to an embodiment of this application;
FIG. 6A and FIG. 6B are a diagram of another information transmission method according to an embodiment of this application;
FIG. 7 is a diagram in which a STA is switched to an AP according to an embodiment of this application;
FIG. 8 is a diagram in which an AP guides a STA to be switched to an AP according to an embodiment of this application; and
FIG. 9 is a diagram of a communication apparatus according to an embodiment of this application.

### DESCRIPTION OF EMBODIMENTS

The technical solutions in embodiments of this application are clearly and completely described in the following with reference to the accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in descriptions of embodiments of this application, "a plurality of" means two or more.

Terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

First, to better understand an information transmission method disclosed in embodiments of this application, a communication system and a scenario to which embodiments of this application are applicable are described.

The technical solutions in embodiments of this application may be applied to a wireless local area network (wireless local area network, WLAN) system, a distributed network system, and the like. For example, this application may be applied to a wireless local area network system of 802.11 series protocols, for example, a next-generation Wi-Fi protocol of IEEE 802.11 ax, like 802.11 be, Wi-Fi 7, or extremely high throughput (extremely high throughput, EHT), and for another example, a next generation of 802.11be, like a system supporting Wi-Fi 8, ultra high reliability (ultra high reliability, UHR), or ultra high reliability and throughput (ultra high reliability and throughput, UHRT), and the like.

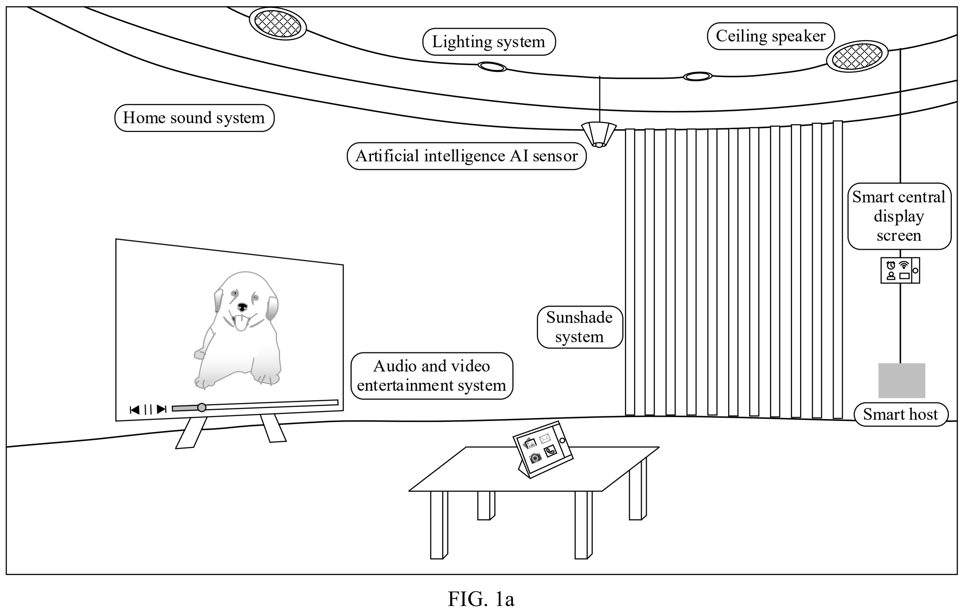

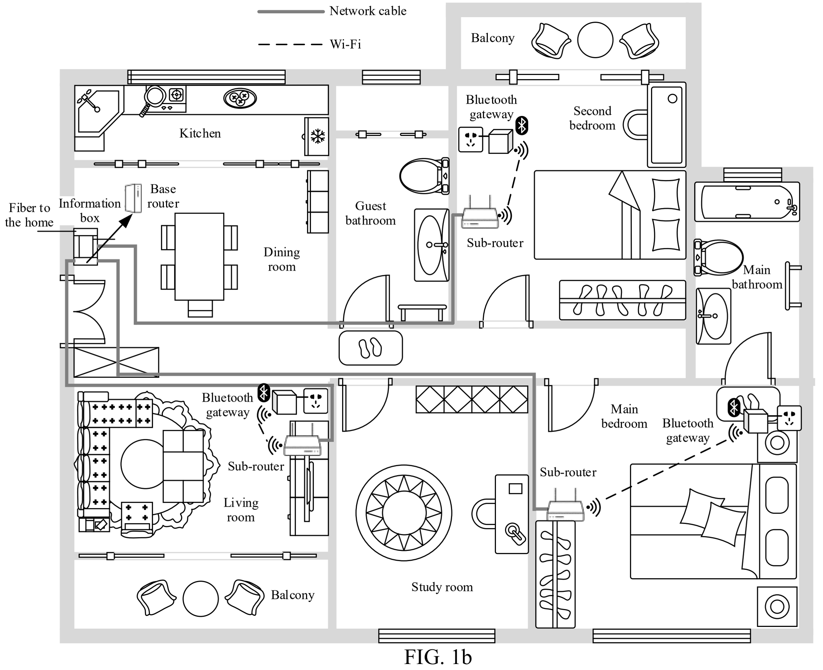

For example, the technical solutions provided in embodiments of this application may be applied to a whole-house intelligence scenario based on a Wi-Fi network, as shown in FIG. 1a. With the emergence of whole-house intelligence and smart home technologies, home appliances, such as sockets, lamps, curtains, air conditioners, TVs, and speakers, gradually become intelligent. In addition to conventional lighting, sunshade, cooling and heating, and entertainment functions, these products are further equipped with WLAN communication and intelligent control modules, to implement intelligent control functions such as remote control and scenario linkage control, improving user experience. For example, refer to FIG. 1b. A user home that supports whole-house smart devices usually has a plurality of sub-routers (used to implement whole-house Wi-Fi network coverage). Different smart devices (devices with a Wi-Fi function) are deployed in different rooms based on function attributes of the smart devices. For example, there are sockets, a TV, speakers, and a curtain in a living room, and there is an air conditioner and a desk lamp in a bedroom. These smart devices can be connected to appropriate sub-routers via a Wi-Fi network to implement network access and intelligent control.

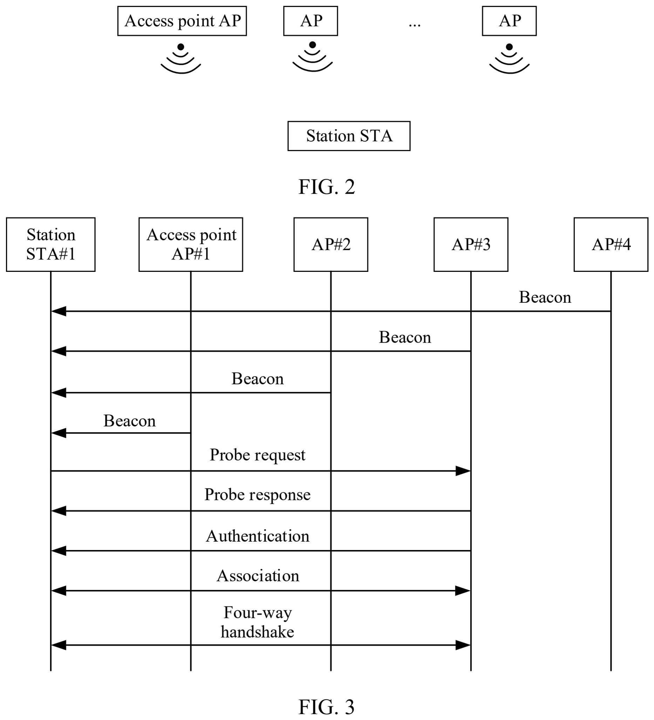

FIG. 2 is a diagram of a structure of a communication system according to an embodiment of this application. The communication system includes an AP and a STA. FIG. 2 shows an example of devices included in the communication system, and does not limit a quantity of APs and a quantity of STAs. The quantity of APs and the quantity of STAs in the communication system are not limited in embodiments of this application. For example, the communication system shown in FIG. 2 may include one primary AP and a plurality of secondary APs that have established connections to the primary AP. The primary AP may be configured to manage all the secondary APs that have established connections to the primary AP.

In embodiments of this application, the AP is an apparatus having a wireless communication function, supports communication by using a WLAN protocol, and has a function of communicating with another device (for example, the STA or another AP) in a WLAN. Certainly, the AP may further have a function of communicating with another device. In a WLAN system, the AP may alternatively be referred to as an AP device or an AP station. The apparatus having a wireless communication function may be a device, may be a chip or a processing system mounted on the device, or the like. The device on which the chip or the processing system is mounted may implement the methods and functions in embodiments of this application under control of the chip or the processing system. In embodiments of this application, the AP is an apparatus that provides a service for the STA, and may support 802.11 series protocols. For example, the AP may be a device like a communication server, a router, a switch, or a bridge. The AP may include various forms of macro base stations, micro base stations, relay stations, and the like. Certainly, the AP may alternatively be a chip or a processing system in these various forms of devices, to implement the methods and functions in embodiments of this application.

The STA is an apparatus having a wireless communication function, supports communication by using the WLAN protocol, and has a capability of communicating with another station or AP in the WLAN. In the WLAN system, the STA may alternatively be referred to as a non-access point station (non-access point station, non-AP STA). For example, the STA is any device that allows a user to communicate with an AP and then communicate with the WLAN. The apparatus may be a device, may be a chip or a processing system mounted on the device, or the like. The device on which the chip or the processing system is mounted may implement the methods and functions in embodiments of this application under control of the chip or the processing system. For example, the STA may be a device having a Wi-Fi function, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, an internet of things node in the internet of things, an in-vehicle communication apparatus, an entertainment device, or a game device in the internet of vehicles, or the like.

In a Wi-Fi network environment, the STA may be connected to the AP, to implement functions such as device control and network access via a Wi-Fi network. AP#1, AP#2, AP#3, AP#4, and STA#1 are used as an example. With reference to FIG. 3, each of AP#1, AP#2, AP#3, and AP#4 broadcasts a beacon (beacon) frame (an AP may declare, by periodically broadcasting a beacon frame including an SSID, existence of a Wi-Fi network corresponding to the AP). STA#1 may send a probe request (probe request, probe req) frame to probe specific Wi-Fi networks existing in a current environment. STA#1 receives a probe response (probe response, probe rsp) frame from AP#3. AP#3 may perform identity authentication by sending an authentication (authentication, auth) frame to STA#1. Then, association (association, assoc) is performed between STA#1 and AP#3. For example, after finding a compatible network and passing identity authentication, STA#1 may attempt to join a network corresponding to AP#3 by sending an association request (association request, assoc req) frame to AP#3. Then, STA#1 performs a four-way handshake with AP#3, to complete a connection between STA#1 and AP#3.

In a whole-house intelligence scenario, to reduce costs, a Wi-Fi chip (module) used in a smart home device is usually simple. As a result, the STA serving as the smart home device has a limited active network selection capability, and may access an AP with a weak Wi-Fi network signal, affecting user experience. For example, the STA may be connected to an AP from which a probe rsp frame received by the STA for the first time comes, but a Wi-Fi network signal of the AP may be weak. Connecting the STA to the AP with the weak Wi-Fi network signal affects user experience.

Embodiments of this application provide an information transmission method. The method helps increase a success rate of switching a STA to an AP with a stronger Wi-Fi network signal, to improve user experience.

The following describes the information transmission method provided in embodiments of this application with reference to the accompanying drawings.

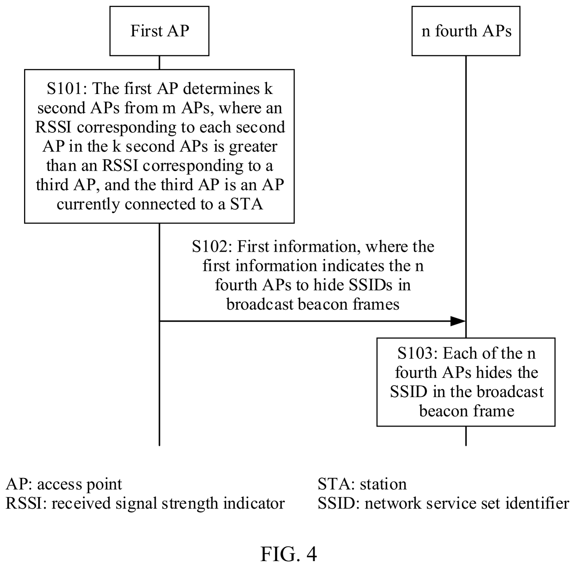

FIG. 4 is a schematic flowchart of an information transmission method according to an embodiment of this application. The information transmission method may include the following steps.

S101: A first AP determines k second APs from m APs, where an RSSI corresponding to each of the k second APs is greater than an RSSI corresponding to a third AP, and the third AP is an AP currently connected to a STA.

In embodiments of this application, an RSSI corresponding to an AP is an RSSI for the AP to receive a signal from the STA. RSSIs respectively corresponding to the first AP, the second AP, and the third AP are RSSIs for the first AP, the second AP, and the third AP to respectively receive signals from the same STA. For example, the RSSI corresponding to the second AP is an RSSI for the second AP to receive a signal from the STA, and the RSSI corresponding to the third AP is an RSSI for the third AP to receive a signal from the same STA. In addition, the RSSI for the AP to receive the signal from the STA may reflect strength of a Wi-Fi network signal received by the STA from the AP. A greater RSSI for the AP to receive the signal from the STA indicates a stronger Wi-Fi network signal received by the STA from the AP. It may be understood that, that the RSSI corresponding to the second AP is greater than the RSSI corresponding to the third AP may indicate that strength of a Wi-Fi network signal received by the STA from the second AP is greater than strength of a Wi-Fi network signal received by the STA from the third AP.

Herein, m is an integer not less than 2, the m APs include the first AP, and the first AP and the third AP may be a same AP, or may not be a same AP. Optionally, the first AP may be a primary AP having a management function, and the m APs may include the first AP and a secondary AP managed by the first AP.

In addition, the second AP and the third AP are different APs. k is a positive integer less than m. When k is equal to 1, that is, there is one second AP, the second AP determined by the first AP may be the first AP, or the second AP determined by the first AP may be an AP other than the first AP and the third AP in the m APs. When k is greater than 1, that is, there are a plurality of second APs, the k second APs determined by the first AP include the first AP and k-1 APs other than the first AP and the third AP in the m APs, or the k second APs determined by the first AP do not include the first AP, and the k second APs are k APs other than the first AP and the third AP in the m APs. In addition, when the first AP and the third AP are a same AP, the k second APs determined by the first AP do not include the first AP.

In an optional implementation, the RSSI corresponding to the third AP is less than a first value. It can be learned that the information transmission method may be applied to a case in which an RSSI corresponding to an AP (namely, the third AP) currently connected to the STA is less than the first value. In a scenario in which the RSSI corresponding to the AP currently connected to the STA is less than the first value, according to the information transmission method provided in embodiments of this application, the second AP may be determined for the STA (the RSSI corresponding to the second AP is greater than the RSSI corresponding to the third AP), and the STA is guided to access the second AP. This helps improve signal strength of a Wi-Fi network accessed by the STA, to improve user experience.

The first value may be predefined. The first value may alternatively be a demarcation value that represents Wi-Fi network signal strength. When the RSSI for the AP to receive the signal from the STA is less than the first value, it may be considered that a Wi-Fi network signal of the AP is weak for the STA. It may be understood that, when the first value represents the demarcation value of the network signal strength, it may indicate that the information transmission method provided in embodiments of this application may be applied to a scenario in which a Wi-Fi network signal of the AP currently connected to the STA is weak. In other words, in the scenario in which the Wi-Fi network signal of the AP currently connected to the STA is weak, according to the signal transmission method provided in embodiments of this application, the second AP with a stronger Wi-Fi network signal may be determined for the STA, and the STA is guided to access the second AP. This helps improve signal strength of a Wi-Fi network accessed by the STA, to improve user experience.

Optionally, in a scenario in which the first AP is the third AP, the first AP may perform the operation of determining the k second APs from the m APs when or after detecting that the RSSI corresponding to the first AP is less than the first value.

Optionally, in a scenario in which the first AP is not the third AP, the method may further include the following: The third AP sends, when the third AP detects that the RSSI corresponding to the third AP is less than the first value, the RSSI corresponding to the third AP to the first AP. The first AP performs the operation of determining the k second APs from the m APs when or after receiving the RSSI corresponding to the third AP. It can be learned that the third AP may autonomously determine whether the RSSI corresponding to the third AP is less than the first value, and report the RSSI to the first AP when the RSSI corresponding to the third AP is less than the first value, so that the first AP performs the operation of determining the k second APs from the m APs.

Optionally, in the scenario in which the first AP is not the third AP, the method may further include the following: The third AP sends the RSSI corresponding to the third AP to the first AP. The first AP determines whether the received RSSI corresponding to the third AP is less than the first value. The first AP performs the operation of determining the k second APs from the m APs when or after determining that the received RSSI corresponding to the third AP is less than the first value. It can be learned that the third AP may report the RSSI corresponding to the third AP to the first AP, and the first AP performs the operation of determining the k second APs from the m APs when or after determining that the RSSI corresponding to the third AP is less than the first value.

The following separately describes optional manners of determining, by the first AP, the k second APs from the m APs in the two cases in which the first AP is the third AP and the first AP is not the third AP, as described in the following optional implementations 1.1 and 1.2.

Implementation 1.1: The first AP is the third AP. In this case, that the first AP determines the k second APs from the m APs may include the following: The first AP sends seventh information to an AP other than the first AP in the m APs, where the seventh information indicates the AP other than the first AP in the m APs to listen to a signal from the STA; at least one AP other than the first AP in the m APs separately listens to the signal from the STA, to obtain and send an RSSI separately corresponding to the at least one AP; and the first AP determines the k second APs based on the RSSI separately corresponding to the at least one AP, where the RSSI corresponding to each of the k second APs is greater than the RSSI corresponding to the third AP.

Implementation 1.2: The first AP is not the third AP. In this case, that the first AP determines the k second APs from the m APs may include the following: The first AP sends seventh information to an AP other than the first AP and the third AP in the m APs, where the seventh information indicates the AP other than the first AP and the third AP in the m APs to listen to a signal from the STA; at least one AP other than the first AP and the third AP in the m APs separately listens to the signal from the STA, to obtain and send an RSSI separately corresponding to the at least one AP; the first AP listens to the signal from the STA, to obtain the RSSI corresponding to the first AP; and the first AP determines the k second APs based on the RSSI separately corresponding to the at least one AP and the RSSI corresponding to the first AP, where the RSSI corresponding to each of the k second APs is greater than the RSSI corresponding to the third AP.

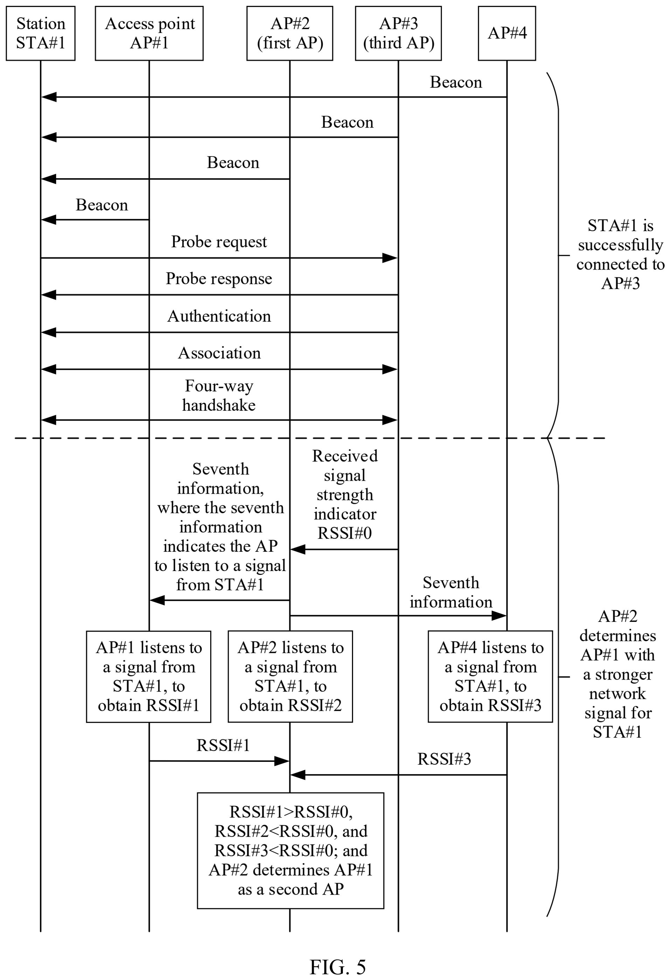

For example, m is equal to 4, the m APs are AP#1, AP#2, AP#3, and AP#4 in FIG. 3, the first AP is AP#2, and the third AP is AP#3. With reference to FIG. 5, AP#3 may send RSSI#0 to AP#2 when RSSI#0 corresponding to AP#3 is less than the first value. After receiving RSSI#0, AP#2 may send seventh information to AP#1 and AP#4, to notify AP#1 and AP#4 to listen to a signal from STA#1. AP#1 listens to a signal from STA#1 to obtain RSSI#1 corresponding to AP#1, and sends RSSI#1 to AP#2. AP#2 listens to a signal from STA#1 to obtain RSSI#2 corresponding to AP#2. AP#4 listens to a signal from STA#1 to obtain RSSI#3 corresponding to AP#4, and sends RSSI#3 to AP#2. AP#2 determines that RSSI#1 is greater than RSSI#0, RSSI#2 is less than RSSI#0, and RSSI#3 is less than RSSI#0. In this case, AP#2 may determine one second AP, that is, k is equal to 1, and the second AP is AP#1.

It can be learned that, in Implementation 1.1 and/or Implementation 1.2, an AP other than the third AP may perform signal listening on the STA, so that the first AP may find, for the STA based on an RSSI corresponding to the AP other than the third AP, the second AP whose Wi-Fi network signal strength is greater than the Wi-Fi network signal strength of the third AP. In addition, in Implementation 1.1 and/or Implementation 1.2, the seventh information may be broadcast by the first AP, or may be sent by the first AP one by one. This is not limited.

S102: The first AP sends first information to n fourth APs, where the n fourth APs are all APs other than the first AP and the k second APs in the m APs, and the first information indicates the n fourth APs to hide SSIDs in broadcast beacon frames. Correspondingly, each of the n fourth APs receives the first information from the first AP. Herein, n is a positive integer less than m. For example, when the k second APs include the first AP, n is equal to m-k; or when the k second APs do not include the first AP, n is equal to m-k-1.

For example, m is equal to 7, the m APs include AP#1 to AP#7, AP#1 is the first AP, and AP#2 is the third AP. AP#1 determines two second APs from AP#1 to AP#7, that is, k is equal to 2. The two second APs are AP#4 and AP#6. In this case, there are four fourth APs in AP#1 to AP#7, that is, n is equal to 4. The four fourth APs are AP#2, AP#3, AP#5, and AP#7.

It may be understood that when the first AP and the third AP are not a same AP, the n fourth APs include the third AP. When the first AP and the third AP are a same AP, the n fourth APs do not include the third AP.

In addition, a specific implementation in which the first AP sends the first information to the n fourth APs is not limited in embodiments of this application. For example, the first AP may broadcast the first information, where the first information may include identifiers of the n fourth APs. A fourth AP that receives the first information may determine, by determining that the first information includes an identifier of the fourth AP, that the first AP indicates the fourth AP to hide an SSID in a broadcast beacon frame. For another example, the first AP may send the first information to each of the n fourth APs, and each fourth AP may determine, by receiving the first information, that the first AP indicates the fourth AP to hide an SSID in the broadcast beacon frame. In addition, a specific implementation in which the first AP sends any one of second information to sixth information to the n fourth APs is not limited in embodiments of this application, and the specific implementation may be similar to the specific implementation in which the first AP sends the first information to the n fourth APs. Details are not described below again.

S103: Each of the n fourth APs hides the SSID in the broadcast beacon frame.

Optionally, in the case in which the k second APs determined by the first AP from the m APs do not include the first AP, the method further includes: The first AP hides an SSID in a broadcast beacon frame. In this manner, in the case in which the k second APs determined by the first AP from the m APs do not include the first AP, all APs other than the second AP in the m APs perform the operation of hiding an SSID in a broadcast beacon frame. In this way, in a process in which the STA performs network scanning after being disconnected from the third AP, the STA can find, through scanning, an unhidden SSID in a beacon frame broadcast by the second AP to discover the second AP, but cannot find, through scanning, SSIDs respectively corresponding to the first AP and the fourth AP whose SSIDs are hidden in broadcast beacon frames. Therefore, all the APs other than the second AP in the m APs are invisible to the STA. This can significantly increase a success rate of connecting the STA to the second AP.

In addition, a sequence of an operation of disconnecting the third AP from the STA and an operation of starting hiding the SSID in the broadcast beacon frame by the fourth AP is not limited in embodiments of this application. The operation of disconnecting the third AP from the STA may be earlier than the operation of starting hiding the SSID in the broadcast beacon frame by the fourth AP, the operation of disconnecting the third AP from the STA may be later than the operation of starting hiding the SSID in the broadcast beacon frame by the fourth AP, or the operation of disconnecting the third AP from the STA and the operation of starting hiding the SSID in the broadcast beacon frame by the fourth AP may be performed simultaneously. In a manner in which the operation of disconnecting the third AP from the STA is later than the operation of starting hiding the SSID in the broadcast beacon frame by the fourth AP, the STA immediately cannot find, through scanning, the fourth AP after the STA is disconnected from the third AP. This helps further increase a success rate of switching the STA from the third AP to the second AP. In addition, the third AP may send a deauthentication (deauthentication, deauth) frame to the STA to terminate an authentication relationship between the third AP and the STA, so that the STA is disconnected from the third AP.

In an optional implementation, the method may further include: The fourth AP cancels hiding the SSID in the beacon frame. The following describes a manner of triggering the operation of canceling, by the fourth AP, hiding the SSID in the beacon frame, as described in the following optional implementations 2.1 to 2.3.

Implementation 2.1: When the first AP detects that the STA is successfully connected to one of the k second APs after the STA is disconnected from the third AP, the first AP sends second information to the n fourth APs, where the second information indicates the n fourth APs to cancel hiding the SSIDs in the beacon frames. Correspondingly, each of the n fourth APs receives the second information from the first AP, and each fourth AP cancels, based on the second information, hiding the SSID in the beacon frame.

It can be learned that, when or after the first AP detects that the STA is successfully switched from the third AP to the second AP, the first AP may indicate, in time, the fourth AP to cancel hiding the SSID in the beacon frame, so that after the STA is successfully connected to the second AP, a remaining STA can find, through scanning in time, an SSID corresponding to the fourth AP. This reduces impact on the remaining STA caused when the remaining STA always cannot find, through scanning, the SSID corresponding to the fourth AP because the fourth AP always hides the SSID in the broadcast beacon frame.

Optionally, in the case in which the k second APs determined by the first AP from the m APs do not include the first AP, the method further includes: When the first AP detects that the STA is successfully connected to one of the k second APs after the STA is disconnected from the third AP, the first AP cancels hiding the SSID in the beacon frame. This manner may be used in a case in which the first AP hides the SSID in the broadcast beacon frame when the k second APs determined by the first AP from the m APs do not include the first AP. In this way, the first AP can cancel, in time, hiding the SSID in the beacon frame, so that the remaining STA can find, through scanning, the SSID corresponding to the first AP. This reduces impact on the remaining STA caused when the remaining STA always cannot find, through scanning, the SSID corresponding to the first AP because the first AP always hides the SSID in the broadcast beacon frame.

Implementation 2.2: The fourth AP cancels, when a first timer expires, hiding the SSID in the beacon frame. For example, the fourth AP may further start the first timer when starting hiding the SSID in the broadcast beacon frame. The first timer is used to perform timing for hiding the SSID in the beacon frame, so that the fourth AP can cancel, when the first timer expires, hiding the SSID in the beacon frame. It can be learned that, when the first timer expires, regardless of whether the STA is successfully switched to the second AP, the fourth AP cancels hiding the SSID in the beacon frame, so that the remaining STA can find, through scanning, the SSID corresponding to the fourth AP. This reduces impact on the remaining STA caused when the remaining STA always cannot find, through scanning, the SSID corresponding to the fourth AP because the fourth AP always hides the SSID in the broadcast beacon frame.

Optionally, the fourth AP may autonomously start the first timer, or the operation of starting the first timer by the fourth AP may be triggered when the fourth AP receives third information from the first AP, where the third information indicates the fourth AP to start the first timer.

Optionally, in the case in which the k second APs determined by the first AP from the m APs do not include the first AP, the method further includes: The first AP cancels, when the first timer expires, hiding the SSID in the beacon frame. For example, the first AP may further start the first timer when starting hiding the SSID in the broadcast beacon frame. The first timer is used to perform timing for hiding the SSID in the beacon frame. It can be learned that the first AP can cancel, in time based on the first timer, hiding the SSID in the beacon frame, so that the remaining STA can find, through scanning, the SSID corresponding to the first AP. This reduces impact on the remaining STA caused when the remaining STA always cannot find, through scanning, the SSID corresponding to the first AP because the first AP always hides the SSID in the broadcast beacon frame.

Implementation 2.3: When the fourth AP receives second information from the first AP before the first timer expires, the fourth AP cancels hiding the SSID in the beacon frame; or when the fourth AP fails to receive second information from the first AP before the first timer expires, and the first timer expires, the fourth AP cancels hiding the SSID in the beacon frame. The second information indicates the fourth AP to cancel hiding the SSID in the beacon frame, and the second information may be sent by the first AP to the n fourth APs when the first AP detects that the STA is successfully connected to one second AP after the STA is disconnected from the third AP.

It can be learned that, when the STA is successfully switched from the third AP to the second AP before the first timer expires, the fourth AP cancels hiding the SSID in the beacon frame. When the first timer expires, even if the STA still fails to be switched from the third AP to the second AP, the fourth AP cancels hiding the SSID in the beacon frame. This reduces impact on the remaining STA caused when the remaining STA always cannot find, through scanning, the SSID corresponding to the fourth AP because the fourth AP always hides the SSID in the broadcast beacon frame.

Optionally, in the case in which the k second APs determined by the first AP from the m APs do not include the first AP, the method further includes: When the first AP detects, before the first timer expires, that the STA is successfully connected to one of the k second APs after the STA is disconnected from the third AP, the first AP cancels hiding the SSID in the beacon frame; or when the first AP fails to detect, before the first timer expires, that the STA is successfully connected to one of the k second APs after the STA is disconnected from the third AP, and the first timer expires, the first AP cancels hiding the SSID in the beacon frame. In this manner, impact on the remaining STA caused when the remaining STA always cannot find, through scanning, the SSID corresponding to the first AP because the first AP always hides the SSID in the broadcast beacon frame can be reduced.

In an optional implementation, the method may further include: The first AP sends fourth information to the n fourth APs, where the fourth information indicates the n fourth APs not to respond to a management frame from the STA. Correspondingly, each of the n fourth APs receives the fourth information from the first AP, and each fourth AP does not respond to the management frame from the STA based on the fourth information. The STA from which the management frame to which the fourth AP does not respond comes is the STA connected to the third AP in step S101.

In embodiments of this application, an AP does not respond to a management frame from the STA. In other words, when receiving the management frame from the STA, the AP does not return, to the STA, a response frame corresponding to the management frame, so that the STA cannot complete a necessary connection negotiation process with the AP. In this way, an effect of rejecting a connection to the STA is implemented. For example, the management frame from the STA may be a probe request frame, an authentication frame, an association request frame, or the like. A response frame corresponding to the probe request frame is a probe response frame, a response frame corresponding to the authentication frame is an authentication response frame, and a response frame corresponding to the association request frame is an association response (association response, assoc rsp) frame. In addition, that the AP does not respond to the management frame from the STA may alternatively be expressed as that the AP silently responds to the management frame from the STA.

It can be learned that, in addition to hiding the SSID in the broadcast beacon frame, the fourth AP does not respond to the management frame from the STA. This further reduces a probability that the STA is connected to the fourth AP after being disconnected from the third AP, and increases a success rate of connecting the STA to the second AP with the stronger Wi-Fi network signal.

Optionally, in the case in which the k second APs determined by the first AP from the m APs do not include the first AP, the method further includes: The first AP does not respond to a management frame from the STA. In this manner, in the case in which the k second APs determined by the first AP from the m APs do not include the first AP, all APs other than the k second APs in the m APs hide SSIDs in broadcast beacon frames, and do not respond to the management frame from the STA. This further reduces a probability that the STA is connected to non-k second APs after being disconnected from the third AP, and increases a success rate of connecting the STA to the second AP with the stronger Wi-Fi network signal. The STA from which the management frame to which the first AP does not respond comes is the STA connected to the third AP in step S101.

In addition, a sequence of the operation of disconnecting the third AP from the STA and an operation of starting, by the fourth AP, not responding to the management frame from the STA is not limited in embodiments of this application. Disconnecting the third AP from the STA may be earlier than starting, by the fourth AP, not responding to the management frame from the STA, disconnecting the third AP from the STA may be later than starting, by the fourth AP, not responding to the management frame from the STA, or disconnecting the third AP from the STA and starting, by the fourth AP, not responding to the management frame from the STA may be performed simultaneously. In a manner in which disconnecting the third AP from the STA is later than starting, by the fourth AP, not responding to the management frame from the STA, the fourth AP immediately rejects the connection to the STA after the STA is disconnected from the third AP. This helps further increase a success rate of switching the STA to the second AP.

In addition, in an optional manner, the fourth information (indicating the fourth AP not to respond to the management frame from the STA) and the first information (indicating the fourth AP to hide the SSID in the broadcast signal frame) may be same information, and the information has both a function of indicating the fourth AP not to respond to the management frame from the STA and a function of indicating the fourth AP to hide the SSID in the broadcast signal frame.

Optionally, the method may further include: The fourth AP cancels not responding to the management frame from the STA. In embodiments of this application, if an AP cancels not responding to the management frame from the STA, the AP may reply to the management frame from the STA. In addition, the AP cancels not responding to the management frame from the STA.

The following describes a manner of triggering the operation of canceling, by the fourth AP, not responding to the management frame from the STA, as described in the following optional implementations 3.1 to 3.3. In addition, that the fourth AP cancels not responding to the management frame from the STA is similar to that the fourth AP cancels hiding the SSID in the beacon frame. For details, refer to the foregoing related descriptions of canceling, by the fourth AP, hiding the SSID in the beacon frame.

Implementation 3.1: When the first AP detects that the STA is successfully connected to one of the k second APs after the STA is disconnected from the third AP, the first AP sends fifth information to the n fourth APs, where the fifth information indicates the n fourth APs to cancel not responding to the management frame from the STA. Correspondingly, each of the n fourth APs receives the fifth information from the first AP, and each fourth AP cancels, based on the fifth information, not responding to the management frame from the STA.

Optionally, in the case in which the k second APs determined by the first AP from the m APs do not include the first AP, the method further includes: When the first AP detects that the STA is successfully connected to one of the k second APs after the STA is disconnected from the third AP, the first AP cancels not responding to the management frame from the STA.

Implementation 3.2: The fourth AP cancels, when a second timer expires, not responding to the management frame from the STA. For example, the fourth AP may further start the second timer when starting not responding to the management frame from the STA. The second timer is used to perform timing for not responding to the management frame from the STA, so that the fourth AP can cancel, when the first timer expires, not responding to the management frame from the STA. Optionally, the fourth AP may autonomously start the second timer, or the operation of starting the second timer by the fourth AP may be triggered when the fourth AP receives sixth information from the first AP, where the sixth information indicates the fourth AP to start the second timer.

Optionally, in the case in which the k second APs determined by the first AP from the m APs do not include the first AP, the method further includes: The first AP cancels, when the second timer expires, not responding to the management frame from the STA. For example, the first AP may further start the second timer when starting not responding to the management frame from the STA.

Implementation 3.3: When the fourth AP receives fifth information from the first AP before the second timer expires, the fourth AP cancels not responding to the management frame from the STA; or when the fourth AP fails to receive fifth information from the first AP before the second timer expires, and the second timer expires, the fourth AP cancels not responding to the management frame from the STA. The fifth information indicates the fourth AP to cancel not responding to the management frame from the STA, and the fifth information may be sent by the first AP to the n fourth APs when the first AP detects that the STA is successfully connected to one of the k second APs after the STA is disconnected from the third AP.

Optionally, in the case in which the k second APs determined by the first AP from the m APs do not include the first AP, the method further includes: When the first AP detects, before the second timer expires, that the STA is successfully connected to one of the k second APs after the STA is disconnected from the third AP, the first AP cancels not responding to the management frame from the STA; or when the first AP fails to detect, before the second timer expires, that the STA is successfully connected to one of the k second APs after the STA is disconnected from the third AP, and the second timer expires, the first AP cancels not responding to the management frame from the STA.

In addition, in an optional manner, in Implementation 3.1 and/or Implementation 3.3, the fifth information (indicating the fourth AP to cancel not responding to the management frame from the STA) and the second information (indicating the fourth AP to cancel hiding the SSID in the broadcast signal frame) may be same information, and the information has both a function of indicating the fourth AP to cancel not responding to the management frame from the STA and a function of indicating the fourth AP to cancel hiding the SSID in the broadcast signal frame.

In an optional manner, in Implementation 3.2 and/or Implementation 3.3, the second timer (used to perform timing for not responding to the management frame from the STA) and the first timer (used to perform timing for hiding the SSID in the beacon frame) may be a same timer, and the timer has a function of perform timing for hiding the SSID in the beacon frame and a function of perform timing for not responding to the management frame from the STA.

In conclusion, in the information transmission method, the first AP determines the k second APs from the m APs, where m is an integer not less than 2, the m APs include the first AP, k is a positive integer less than m, the RSSI corresponding to each of the k second APs is greater than the RSSI corresponding to the third AP, the third AP is the AP currently connected to the STA, the RSSI corresponding to the second AP is the RSSI for the second AP to receive the signal from the STA, and the RSSI corresponding to the third AP is the RSSI for the third AP to receive the signal from the STA. The first AP sends the first information to the n fourth APs, where the n fourth APs are all the APs other than the first AP and the k second APs in the m APs, n is a positive integer less than m, and the first information indicates the n fourth APs to hide the SSIDs in the broadcast beacon frames. Each of the n fourth APs hides the SSID in the broadcast beacon frame based on the first information.

It can be learned that, for the STA, the Wi-Fi network signal of the second AP is stronger than the Wi-Fi network signal of the third AP currently connected to the STA. In comparison with a manner in which only the third AP does not respond to the management frame from the STA after being disconnected from the STA within a specific time period, in the information transmission method provided in embodiments of this application, the first AP indicates all the APs other than the first AP and the k second APs in the m APs to hide SSIDs in broadcast beacon frames, so that all the APs other than the first AP and the k second APs in the m APs hide the SSIDs in the broadcast beacon frames, and the k second APs do not hide SSIDs in broadcast beacon frames. In this way, in a process in which the STA performs SSID scanning after being disconnected from the third AP, the STA can find, through scanning, the SSID corresponding to the second AP, and the SSIDs respectively corresponding to all the APs other than the first AP and the k second APs in the m APs are invisible to the STA. This helps increase a success rate of connecting the STA to the second AP, that is, increase a success rate of switching the STA from the third AP to the second AP with the stronger Wi-Fi network signal, and improve user experience.

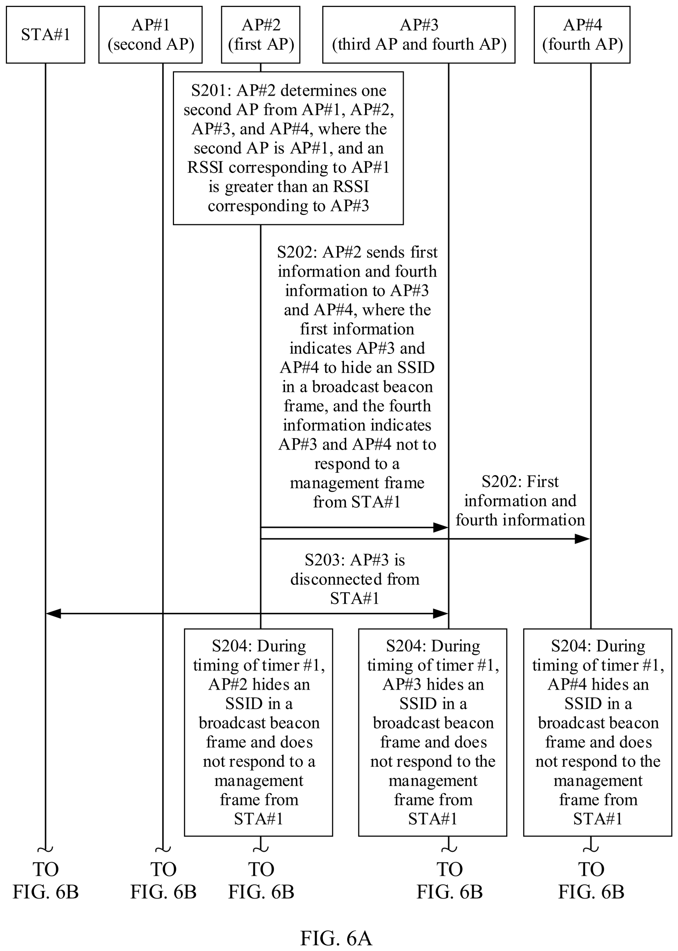

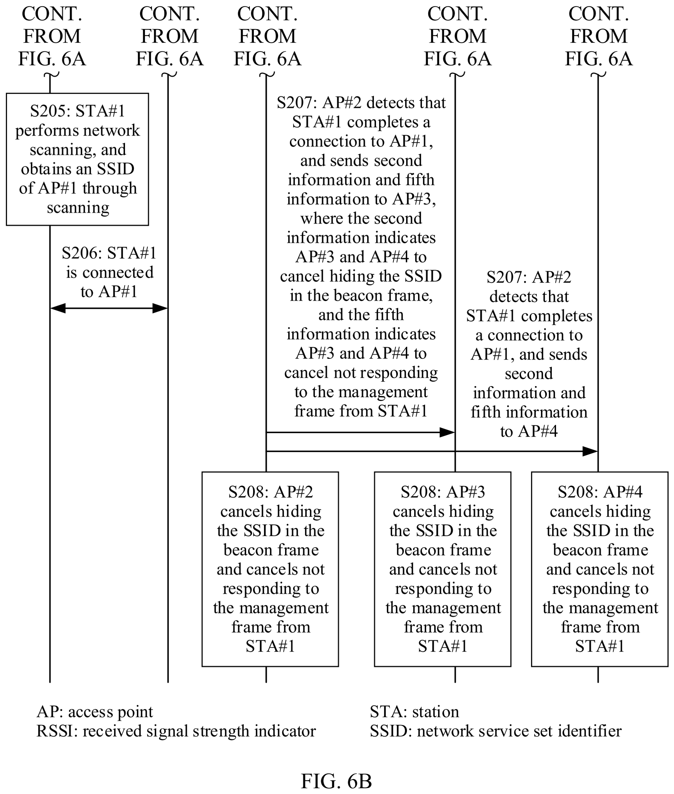

The following uses an example in which m is equal to 4, m APs are AP#1, AP#2, AP#3, and AP#4 in FIG. 3 (where AP#2 is a primary AP, and AP#1, AP#3, and AP#4 are all secondary APs corresponding to AP#2), a first AP is AP#2, a third AP currently connected to STA#1 is AP#3, and k is equal to 1 to describe an information transmission method, as shown in FIG. 6A and FIG. 6B. In the information transmission method shown in FIG. 6A and FIG. 6B, an RSSI corresponding to an AP is an RSSI for the AP to receive a signal from STA#1. The information transmission method shown in FIG. 6A and FIG. 6B includes the following steps.

S201: AP#2 determines one second AP from AP#1, AP#2, AP#3, and AP#4, where the second AP is AP#1, and an RSSI corresponding to AP#1 is greater than an RSSI corresponding to AP#3. It can be learned that a quantity of fourth APs, namely, n, is equal to 2, and the two fourth APs are AP#3 and AP#4.

S202: AP#2 sends first information and fourth information to AP#3 and AP#4, where the first information indicates AP#3 and AP#4 to hide an SSID in a broadcast beacon frame, and the fourth information indicates AP#3 and AP#4 not to respond to a management frame from STA#1. Correspondingly, each of AP#3 and AP#4 receives the first information and the fourth information from AP#2.

S203: AP#3 is disconnected from STA#1.

S204: During timing of timer #1, AP#2 hides an SSID in a broadcast beacon frame and does not respond to a management frame from STA#1. During timing of timer #1, AP#3 hides an SSID in a broadcast beacon frame and does not respond to the management frame from STA#1. During timing of timer #1, AP#4 hides an SSID in a broadcast beacon frame and does not respond to the management frame from STA#1.

Timer #1 is used to perform timing for hiding the SSID in the beacon frame and not responding to the management frame from STA#1. When AP#2 fails to detect, before timer #1 expires, that STA#1 is successfully connected to AP#1, and timer #1 expires, AP#2 cancels hiding the SSID in the beacon frame and cancels not responding to the management frame from STA#1. When AP#3 fails to receive the second information and the fifth information from AP#2 before timer #1 expires, and timer #1 expires, AP#3 cancels hiding the SSID in the beacon frame and cancels not responding to the management frame from STA#1. When AP#4 fails to receive the second information and the fifth information from AP#2 before timer #1 expires, and timer #1 expires, AP#4 cancels hiding the SSID in the beacon frame and cancels not responding to the management frame from STA#1. The second information indicates AP#3 and AP#4 to cancel hiding the SSID in the beacon frame, and the fifth information indicates AP#3 and AP#4 to cancel not responding to the management frame from STA#1.

S205: STA#1 performs network scanning, and obtains an SSID of AP#1 through scanning.

Because AP#1 does not hide the SSID in a broadcast beacon frame, and AP#2, AP#3, and AP#4 all hide the SSIDs in the broadcast beacon frames, for STA#1, the SSID corresponding to AP#1 is visible, the SSID corresponding to AP#2, the SSID corresponding to AP#3, and the SSID corresponding to AP#4 are all invisible.

S206: STA#1 is connected to AP#1.

Because AP#1 may respond to a management frame from STA#1, STA#1 initiates access to AP#1, and AP#1 may respond to STA#1. This helps complete a connection between STA#1 and AP#1. However, AP#2 does not respond to the management frame from STA#1. Even if STA#1 learns of the SSID corresponding to AP#2 to initiate access to AP#2, AP#2 does not respond. As a result, STA#1 cannot complete a necessary connection process with AP#2. Similarly, AP#3 does not respond to the management frame from STA#1. Even if STA#1 learns of the SSID corresponding to AP#3 to initiate access to AP#3, AP#3 does not respond. As a result, STA#1 cannot complete a necessary connection process with AP#3. AP#4 does not respond to the management frame from STA#1. Even if STA#1 learns of the SSID corresponding to AP#4 to initiate access to AP#4, AP#4 does not respond. As a result, STA#1 cannot complete a necessary connection process with AP#4.

S207: AP#2 detects that STA#1 completes a connection to AP#1, and AP#2 sends second information and fifth information to AP#3 and AP#4, where the second information indicates AP#3 and AP#4 to cancel hiding the SSID in the beacon frame, and the fifth information indicates AP#3 and AP#4 to cancel not responding to the management frame from STA#1. Correspondingly, each of AP#3 and AP#4 receives the second information and the fifth information from AP#1.

S208: AP#2 cancels hiding the SSID in the beacon frame and cancels not responding to the management frame from STA#1. AP#3 cancels hiding the SSID in the beacon frame and cancels not responding to the management frame from STA#1. AP#4 cancels hiding the SSID in the beacon frame and cancels not responding to the management frame from STA#1.

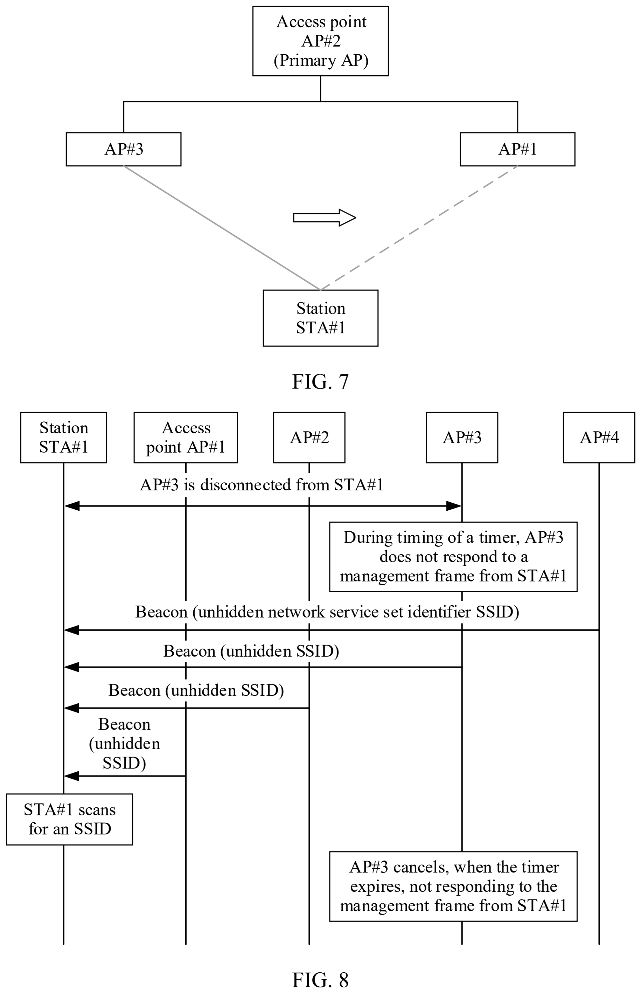

It can be learned that, when STA#1 is connected to AP#3 with a weak Wi-Fi network signal, according to the information transmission method shown in FIG. 6A and FIG. 6B, the AP side may guide STA#1 to be switched from AP#3 to AP#1 with a stronger Wi-Fi network signal, as shown in FIG. 7. In addition, in comparison with a manner shown in FIG. 8 in which only STA#1 is guided to be switched by not responding to the management frame from STA#1 during timing of a timer after AP#3 is disconnected from STA#1 (in the manner shown in FIG. 8, STA#1 is more likely to be connected to another AP other than AP#1 or reconnected to AP#3 with a weak Wi-Fi network signal after the timer expires), in the information transmission method shown in FIG. 6A and FIG. 6B, all APs other than the determined AP#1 with a stronger Wi-Fi network signal in AP#1 to AP#4 hide the SSIDs in the broadcast beacon frames and do not respond to the management frame from STA#1. This can increase a success rate of connecting STA#1 to AP#1, that is, increase a success rate of switching STA#1 from AP#3 to AP#1, and helps improve user experience.

It may be understood that, to implement functions in the foregoing method, the first AP and the fourth AP each include a corresponding hardware structure and/or software module for performing each function. Persons skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

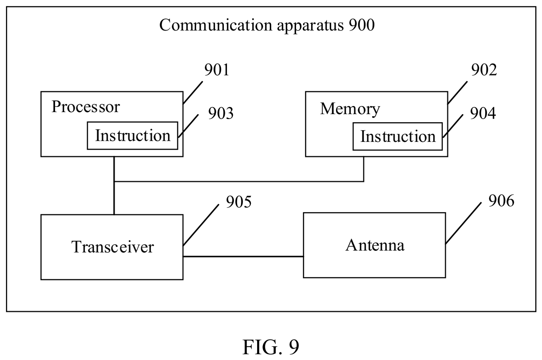

An embodiment of this application provides a communication apparatus 900, as shown in FIG. 9. The communication apparatus 900 may be a first AP or a fourth AP, or may be a chip, a chip system, a processor, or the like that supports the first AP in implementing the foregoing methods, or may be a chip, a chip system, a processor, or the like that supports the fourth AP in implementing the foregoing methods. The apparatus may be configured to implement the method described in the foregoing method embodiments. For details, refer to the descriptions in the foregoing method embodiments.

The communication apparatus 900 may include one or more processors 901. The processor 901 may be configured to implement a part of or all functions of the network device or the terminal device by using a logic circuit or running a computer program. The processor 901 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control a communication apparatus, execute a software program, and process data of the software program.

Optionally, the communication apparatus 900 may include one or more memories 902, and the memory 902 may store instructions 904 or a program. The instructions or the program may be run on the processor 901, so that the communication apparatus 900 performs the methods described in the foregoing method embodiments. Optionally, the memory 902 may further store data. The processor 901 and the memory 902 may be separately disposed, or may be integrated together.

The memory 902 may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 900 may further include a transceiver 905 and an antenna 906. The transceiver 905 may be referred to as a transceiver unit, a transceiver machine, a transceiver circuit, or the like, and is configured to implement a transceiver function. The transceiver 905 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, the communication apparatus 900 has a function of the first AP in the foregoing method embodiments.

The processor 901 is configured to determine k second APs from m APs, where m is an integer not less than 2, the m APs include the first AP, k is a positive integer less than m, an RSSI corresponding to a second AP is greater than an RSSI corresponding to a third AP, the third AP is an AP currently connected to a STA, the RSSI corresponding to the second AP is an RSSI for the second AP to receive a signal from the STA, and the RSSI corresponding to the third AP is an RSSI for the third AP to receive a signal from the STA.

The transceiver 905 is configured to send first information to n fourth APs, where the n fourth APs are all APs other than the communication apparatus 900 and the k second APs in the m APs, n is a positive integer less than m, and the first information indicates the n fourth APs to hide SSIDs in broadcast beacon frames.

In an optional implementation, the processor 901 detects that the STA is successfully connected to one of the k second APs after the STA is disconnected from the third AP. The transceiver 905 is further configured to send second information to the n fourth APs, where the second information indicates the n fourth APs to cancel hiding the SSIDs in the beacon frames.

In an optional implementation, the transceiver 905 is further configured to send third information to the n fourth APs, where the third information indicates the n fourth APs to start a first timer, and the first timer is used to perform timing for hiding the SSIDs in the beacon frames.

In an optional implementation, the transceiver 905 is further configured to send fourth information to the n fourth APs, where the fourth information indicates the n fourth APs not to respond to a management frame from the STA.

In an optional implementation, the processor 901 detects that the STA is successfully connected to one of the k second APs after the STA is disconnected from the third AP. The transceiver 905 is further configured to send fifth information to the n fourth APs, where the fifth information indicates the n fourth APs to cancel not responding to the management frame from the STA.

In an optional implementation, the transceiver 905 is further configured to send sixth information to the n fourth APs, where the sixth information indicates the n fourth APs to start a second timer, and the second timer is used to perform timing for not responding to the management frame from the STA.

In an optional implementation, the communication apparatus 900 is not one of the k second APs. The processor 901 is further configured to hide an SSID in a broadcast beacon frame.

Optionally, the processor 901 detects that the STA is successfully connected to one of the k second APs after the STA is disconnected from the third AP. The processor 901 is further configured to cancel hiding the SSID in the beacon frame.

Optionally, the processor 901 is further configured to start the first timer; and the processor 901 is further configured to cancel, when the first timer expires, hiding the SSID in the beacon frame.

Optionally, the processor 901 is further configured to start the first timer. The processor 901 is further configured to cancel, when it is detected, before the first timer expires, that the STA is successfully connected to one of the k second APs after the STA is disconnected from the third AP, hiding the SSID in the beacon frame; or the processor 901 is further configured to cancel, when it is not detected, before the first timer expires, that the STA is successfully connected to one of the k second APs after the STA is disconnected from the third AP, and the first timer expires, hiding the SSID in the beacon frame.

In an optional implementation, the communication apparatus 900 is not one of the k second APs. The processor 901 is further configured to not respond to a management frame from the STA.

Optionally, the processor 901 detects that the STA is successfully connected to one of the k second APs after the STA is disconnected from the third AP. The processor 901 is further configured to cancel not responding to the management frame from the STA.

Optionally, the processor 901 is further configured to start the second timer; and the processor 901 is further configured to cancel, when the second timer expires, not responding to the management frame from the STA.

Optionally, the processor 901 is further configured to start the second timer. The processor 901 is further configured to: cancel, when it is detected, before the second timer expires, that the STA is successfully connected to one of the k second APs after the STA is disconnected from the third AP, not responding to the management frame from the STA; or cancel, when it is not detected, before the second timer expires, that the STA is successfully connected to one of the k second APs after the STA is disconnected from the third AP, and the second timer expires, not responding to the management frame from the STA.

In an optional implementation, the RSSI corresponding to the third AP is less than a first value.

In an optional implementation, the transceiver 905 is further configured to send seventh information to an AP other than the communication apparatus 900 in the m APs, where the seventh information indicates the AP other than the communication apparatus 900 in the m APs to listen to a signal from the STA. The transceiver 905 is further configured to receive an RSSI separately corresponding to at least one AP other than the communication apparatus 900 in the m APs, where the RSSI separately corresponding to the at least one AP is an RSSI for the at least one AP to separately receive a signal from the STA. When determining the k second APs from the m APs, the processor 901 is specifically configured to determine the k second APs based on the RSSI separately corresponding to the at least one AP.

Optionally, the communication apparatus 900 is not the third AP. The processor 901 is further configured to listen to a signal from the STA, to obtain an RSSI corresponding to the communication apparatus 900. When determining the k second APs based on the RSSI separately corresponding to the at least one AP, the processor 901 is specifically configured to determine the k second APs based on the RSSI corresponding to the communication apparatus 900 and the RSSI separately corresponding to the at least one AP.

In another possible design, the communication apparatus 900 has a function of the fourth AP in the foregoing method embodiments.

The transceiver 905 is configured to receive first information from a first AP, where the first information indicates the communication apparatus 900 to hide an SSID in a broadcast beacon frame; and the processor 901 is configured to hide the SSID in the broadcast beacon frame based on the first information.

In an optional implementation, the transceiver 905 is further configured to receive second information from the first AP, where the second information indicates the communication apparatus 900 to cancel hiding the SSID in the beacon frame; and the processor 901 is further configured to cancel, based on the second information, hiding the SSID in the beacon frame.

In an optional implementation, the processor 901 is further configured to start a first timer; and the processor 901 is further configured to cancel, when the first timer expires, hiding the SSID in the beacon frame.

In an optional implementation, the processor 901 is further configured to start the first timer. The processor 901 is further configured to: when the transceiver 905 receives second information from the first AP before the first timer expires, cancel hiding the SSID in the beacon frame; or when the transceiver 905 fails to receive second information from the first AP before the first timer expires, and the first timer expires, cancel hiding the SSID in the beacon frame. The second information indicates the communication apparatus 900 to cancel hiding the SSID in the beacon frame.

In an optional implementation, the transceiver 905 is further configured to receive third information from the first AP, where the third information indicates the communication apparatus 900 to start the first timer, and the first timer is used to perform timing for hiding the SSID in the beacon frame.

In an optional implementation, the transceiver 905 is further configured to receive fourth information from the first AP, where the fourth information indicates the communication apparatus 900 not to respond to a management frame from a STA. The processor 901 is further configured to not respond to the management frame from the STA based on the fourth information.

Optionally, the transceiver 905 is further configured to receive fifth information from the first AP, where the fifth information indicates the communication apparatus 900 to cancel not responding to the management frame from the STA. The processor 901 is further configured to cancel, based on the fifth information, not responding to the management frame from the STA.

Optionally, the processor 901 is further configured to start a second timer; and the processor 901 is further configured to cancel, when the second timer expires, not responding to the management frame from the STA.

Optionally, the processor 901 is further configured to start the second timer. The processor 901 is further configured to: when the transceiver 905 receives fifth information from the first AP before the second timer expires, cancel not responding to the management frame from the STA; or when the transceiver 905 fails to receive fifth information from the first AP before the second timer expires, and the second timer expires, cancel not responding to the management frame from the STA. The fifth information indicates the communication apparatus 900 to cancel not responding to the management frame from the STA.

Optionally, the transceiver 905 is further configured to receive sixth information from the first AP, where the sixth information indicates the communication apparatus 900 to start the second timer, and the second timer is used to perform timing for not responding to the management frame from the STA.

In still another possible design, the processor 901 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In yet another possible design, optionally, the processor 901 may store instructions 903. When the instructions 903 are run on the processor 901, the communication apparatus 900 is enabled to perform the methods described in the foregoing method embodiments. The instructions 903 may be built into the processor 901. In this case, the processor 901 may be implemented by using hardware.

In still yet another possible design, the communication apparatus 900 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixedsignal IC, an application-specific integrated circuit (application-specific integrated circuit, ASIC), a printed circuit board (printed circuit board, PCB), a device, or the like.

An embodiment of this application further provides another communication apparatus. A structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus has a function of the first AP in the foregoing method embodiments.

The processor unit is configured to determine k second APs from m APs, where m is an integer not less than 2, the m APs include the first AP, k is a positive integer less than m, an RSSI corresponding to each of the k second APs is greater than an RSSI corresponding to a third AP, the third AP is an AP currently connected to a STA, the RSSI corresponding to the second AP is an RSSI for the second AP to receive a signal from the STA, and the RSSI corresponding to the third AP is an RSSI for the third AP to receive a signal from the STA.

The communication unit is configured to send first information to n fourth APs, where the n fourth APs are all APs other than the communication apparatus 1100 and the k second APs in the m APs, n is a positive integer less than m, and the first information indicates the n fourth APs to hide SSIDs in broadcast beacon frames.

In another implementation, the communication apparatus has a function of the fourth AP in the foregoing method embodiments.

The communication unit is configured to receive first information from a first AP, where the first information indicates the communication apparatus to hide an SSID in a broadcast beacon frame; and the processing unit is configured to hide the SSID in the broadcast beacon frame based on the first information.

This embodiment of this application and the foregoing method embodiments are based on a same concept, and technical effects brought by this embodiment of this application and the foregoing method embodiments are also the same. For a specific principle, refer to the descriptions in the foregoing method embodiments. Details are not described again.

Persons skilled in the art may further understand that various illustrative logical blocks (illustrative logical block) and steps (step) that are listed in embodiments of this application may be implemented by using hardware, software, or a combination thereof. Whether the functions are implemented by using hardware or software depends on particular applications and a design requirement of the entire system. Persons skilled in the art may use various methods to implement the described functions for each particular application, but it should not be considered that the implementation goes beyond the scope of embodiments of this application.

This application further provides a readable storage medium, configured to store instructions. When the instructions are executed by a communication apparatus, a function in any one of the foregoing method embodiments is implemented.

This application further provides a program product, configured to store instructions. When the instructions are executed by a communication apparatus, a function in any one of the foregoing method embodiments is implemented.

This application further provides a computer program. When the computer program is run on a computer, a function in any one of the foregoing method embodiments is implemented.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An information transmission method, wherein the method comprises:
determining, by a first access point AP, k second APs from m APs, wherein m is an integer not less than 2, the m APs comprise the first AP, k is a positive integer less than m, a received signal strength indicator RSSI corresponding to each of the k second APs is greater than an RSSI corresponding to a third AP, the third AP is an AP currently connected to a station STA, the RSSI corresponding to the second AP is an RSSI for the second AP to receive a signal from the STA, and the RSSI corresponding to the third AP is an RSSI for the third AP to receive a signal from the STA; and
sending, by the first AP, first information to n fourth APs, wherein the n fourth APs are all APs other than the first AP and the k second APs in the m APs, n is a positive integer less than m, and the first information indicates the n fourth APs to hide network service set identifiers SSIDs in broadcast beacon frames.

2. The method according to claim 1, wherein the method further comprises:
when the first AP detects that the STA is successfully connected to one of the k second APs after the STA is disconnected from the third AP, sending, by the first AP, second information to the n fourth APs, wherein the second information indicates the n fourth APs to cancel hiding the SSIDs in the beacon frames.

3. The method according to claim 1 or 2, wherein the method further comprises:
sending, by the first AP, third information to the n fourth APs, wherein the third information indicates the n fourth APs to start a first timer, and the first timer is used to perform timing for hiding the SSIDs in the beacon frames.

4. The method according to any one of claims 1 to 3, wherein the method further comprises:
sending, by the first AP, fourth information to the n fourth APs, wherein the fourth information indicates the n fourth APs not to respond to a management frame from the STA.

5. The method according to claim 4, wherein the method further comprises:
when the first AP detects that the STA is successfully connected to one of the k second APs after the STA is disconnected from the third AP, sending, by the first AP, fifth information to the n fourth APs, wherein the fifth information indicates the n fourth APs to cancel skipping responding to the management frame from the STA.

6. The method according to claim 4 or 5, wherein the method further comprises:
sending, by the first AP, sixth information to the n fourth APs, wherein the sixth information indicates the n fourth APs to start a second timer, and the second timer is used to perform timing for skipping responding to the management frame from the STA.

7. The method according to any one of claims 1 to 6, wherein the first AP is not one of the k second APs, and the method further comprises:
hiding, by the first AP, an SSID in a broadcast beacon frame.

8. The method according to claim 7, wherein the method further comprises:
when the first AP detects that the STA is successfully connected to one of the k second APs after the STA is disconnected from the third AP, canceling, by the first AP, hiding the SSID in the beacon frame.

9. The method according to claim 7, wherein the method further comprises:
starting, by the first AP, the first timer; and
canceling, by the first AP when the first timer expires, hiding the SSID in the beacon frame.

10. The method according to claim 7, wherein the method further comprises:
starting, by the first AP, the first timer; and
when the first AP detects, before the first timer expires, that the STA is successfully connected to one of the k second APs after the STA is disconnected from the third AP, canceling, by the first AP, hiding the SSID in the beacon frame; or
when the first AP fails to detect, before the first timer expires, that the STA is successfully connected to one of the k second APs after the STA is disconnected from the third AP, and the first timer expires, canceling, by the first AP, hiding the SSID in the beacon frame.

11. The method according to any one of claims 7 to 10, wherein the method further comprises:
skipping, by the first AP, responding to a management frame from the STA.

12. The method according to claim 11, wherein the method further comprises:
when the first AP detects that the STA is successfully connected to one of the k second APs after the STA is disconnected from the third AP, canceling, by the first AP, skipping responding to the management frame from the STA.

13. The method according to claim 11, wherein the method further comprises:
starting, by the first AP, the second timer; and
canceling, by the first AP when the second timer expires, skipping responding to the management frame from the STA.

14. The method according to claim 11, wherein the method further comprises:
starting, by the first AP, the second timer; and
when the first AP detects, before the second timer expires, that the STA is successfully connected to one of the k second APs after the STA is disconnected from the third AP, canceling, by the first AP, skipping responding to the management frame from the STA; or
when the first AP fails to detect, before the second timer expires, that the STA is successfully connected to one of the k second APs after the STA is disconnected from the third AP, and the second timer expires, canceling, by the first AP, skipping responding to the management frame from the STA.

15. The method according to any one of claims 1 to 14, wherein determining, by the first AP, the k second APs from the m APs comprises:
sending, by the first AP, seventh information to an AP other than the first AP in the m APs, wherein the seventh information indicates the AP other than the first AP in the m APs to listen to a signal from the STA;
receiving, by the first AP, an RSSI separately corresponding to at least one AP other than the first AP in the m APs, wherein the RSSI separately corresponding to the at least one AP is an RSSI for the at least one AP to separately receive a signal from the STA; and
determining, by the first AP, the k second APs based on the RSSI separately corresponding to the at least one AP.

16. The method according to claim 15, wherein the first AP is not the third AP, and the method further comprises:
listening to, by the first AP, a signal from the STA, to obtain an RSSI corresponding to the first AP; and
determining, by the first AP, the k second APs based on the RSSI separately corresponding to the at least one AP comprises: determining, by the first AP, the k second APs based on the RSSI corresponding to the first AP and the RSSI separately corresponding to the at least one AP.

17. An information transmission method, wherein the method comprises:
receiving, by a fourth access point AP, first information from a first AP, wherein the first information indicates the fourth AP to hide a network service set identifier SSID in a broadcast beacon frame; and
hiding, by the fourth AP, the SSID in the broadcast beacon frame based on the first information.

18. The method according to claim 17, wherein the method further comprises:
receiving, by the fourth AP, second information from the first AP, wherein the second information indicates the fourth AP to cancel hiding the SSID in the beacon frame; and
canceling, by the fourth AP based on the second information, hiding the SSID in the beacon frame.

19. The method according to claim 17, wherein the method further comprises:
starting, by the fourth AP, a first timer; and
canceling, by the fourth AP when the first timer expires, hiding the SSID in the beacon frame.

20. The method according to claim 17, wherein the method further comprises:
starting, by the fourth AP, a first timer; and
when the fourth AP receives second information from the first AP before the first timer expires, canceling, by the fourth AP, hiding the SSID in the beacon frame; or
when the fourth AP fails to receive second information from the first AP before the first timer expires, and the first timer expires, canceling, by the fourth AP, hiding the SSID in the beacon frame, wherein
the second information indicates the fourth AP to cancel hiding the SSID in the beacon frame.

21. The method according to claim 19 or 20, wherein the method further comprises:
receiving, by the fourth AP, third information from the first AP, wherein the third information indicates the fourth AP to start the first timer, and the first timer is used to perform timing for hiding the SSID in the beacon frame.

22. The method according to any one of claims 17 to 21, wherein the method further comprises:
receiving, by the fourth AP, fourth information from the first AP, wherein the fourth information indicates the fourth AP not to respond to a management frame from a station STA; and
skipping, by the fourth AP based on the fourth information, responding to the management frame from the STA.

23. The method according to claim 22, wherein the method further comprises:
receiving, by the fourth AP, fifth information from the first AP, wherein the fifth information indicates the fourth AP to cancel skipping responding to the management frame from the STA; and
canceling, by the fourth AP based on the fifth information, skipping responding to the management frame from the STA.

24. The method according to claim 22, wherein the method further comprises:
starting, by the fourth AP, a second timer; and
canceling, by the fourth AP when the second timer expires, skipping responding to the management frame from the STA.

25. The method according to claim 22, wherein the method further comprises:
starting, by the fourth AP, a second timer; and
when the fourth AP receives fifth information from the first AP before the second timer expires, canceling, by the fourth AP, skipping responding to the management frame from the STA; or
when the fourth AP fails to receive fifth information from the first AP before the second timer expires, and the second timer expires, canceling, by the fourth AP, skipping responding to the management frame from the STA, wherein
the fifth information indicates the fourth AP to cancel skipping responding to the management frame from the STA.

26. The method according to claim 24 or 25, wherein the method further comprises:
receiving, by the fourth AP, sixth information from the first AP, wherein the sixth information indicates the fourth AP to start the second timer, and the second timer is used to perform timing for skipping responding to the management frame from the STA.

27. A communication apparatus, comprising a memory and a processor, wherein
the memory is configured to store a program or instructions; and
the processor is configured to execute the program or the instructions stored in the memory, so that the communication apparatus performs the method according to any one of claims 1 to 16 or performs the method according to any one of claims 17 to 26.
